(19) Europäisches Patentamt / European Patent Office / Office européen des brevets

(11) **EP 3 208 901 A1**

(12) **EUROPEAN PATENT APPLICATION**

(43) Date of publication:
**23.08.2017 Bulletin 2017/34**

(51) Int Cl.:
**H02B 1/50** (2006.01)

(21) Application number: **17156628.4**

(22) Date of filing: **17.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.02.2016 IT UB20160861**

(71) Applicant: **C.I.S. Sud s.r.l.
00040 Ariccia (RM) (IT)**

(72) Inventor: **BERNARDINI, Giuseppe
00040 IT (IT)**

(74) Representative: **Santi, Filippo et al
Barzanò & Zanardo Roma S.p.A.
Via Piemonte 26
00187 Roma (IT)**

(54) **RETRACTABLE ROAD CABINET**

(57)     The present invention concerns a housing structure (1) of a rectractable road cabinet (2), said housing structure (1) being apt to be buried and comprising a base (14), apt to constitute a support base for said road cabinet, and an articulated frame (11), comprising at least four posts (12), that define the vertical edges of said housing structure (1), said posts (12) resting on said base (14) and being connected together at the bottom by means of lower beams (13) and at the top by means of upper beams (13'), said upper beams constituting a quadrangle arranged horizontally, i.e. the perimeter of an ideal supporting plane of an overlying manhole cover (2).

The invention additionally concerns a method of laying a retractable road cabinet (3) in said inground housing structure (1).

Fig. 1

**Description**

The present invention concerns an inground housing structure of a rectractable road cabinet.

The invention relates to the field of installations related to distribution networks for electrical power, telephone, gas/water, or to traffic light apparatuses and in general to all management systems to be placed outdoor.

More particularly, the present patent application refers to cabinets currently used in the implementing development of the telephone network with the so-called Fiber To The Cabinet (FTTCa) transmission system, but the solution proposed according to the present invention can be easily adapted to cabinets of different types of distribution networks, such as those listed in the previous paragraph.

It is known that, currently, the urban telephone network between the telephone exchange, at the centre of a residential area, and the users connected to it, is constituted by a primary network and a secondary network made of copper. The primary network combines the telephone exchange with a road cabinet, called service area interface (often referred to simply by the acronym SAI), while the secondary network combines the SAI with the users.

In the so-called Fiber To The Cabinet (FTTCa) transmissive system, the primary network is made of optical fiber, replacing the copper cable, which was used previously, with the optical cable, while the secondary network remains made of copper.

The FTTCa transmissive system allows to obtain a better bandwidth as it reduces the length of the copper network used.

In this transmission system, the service area interface becomes an active road cabinet (or cabinet), where the incoming optical fibers and the departing copper pairs are terminated, but where the transmission equipment and all the various accessories for their power supplying are also contained.

It follows that the increased need for replacement of old service area interfaces with these new active road cabinets, or even for installation of new road cabinets, becomes increasingly difficult, given the increasing difficulty of obtaining the permits to be issued by the entities that own the roads.

Unfortunately, in fact, until now the activity of installation of road cabinets has been very extemporised and usually little cured, especially as regards the insertion of the cabinets in a manner compatible with the environment in which they are installed. Consequently, it is possible to find road cabinets badly placed against the walls of buildings, or in an isolated position on the edge of the sidewalks, at the limit of the road end.

Often, additionally, the view that results is that of substantial points with densification of objects of different sizes and shapes.

Then, it has to be added the bad view of decay over time of the materials and the vandalism covering the artifacts of writings and posters.

The resulting environmental impact is significant, giving rise to a feeling of carelessness in maintenance and general degradation, that can not be underestimated.

In this context it has been proposed in accordance with the Italian patent application No. RM2014A000530 of September 18, 2014 and the corresponding European patent application No. 15185943.6 of 18 September 2015, in the name of the same applicant, to manufacture and install retractable road cabinets, able to solve all the problems of visual impact and environmental inclusion of the cabinets themselves.

According to said patent applications it has been proposed a rectractable road cabinet comprising an outer container adapted to be buried, with openings and a lid, which closes the upper portion of said outer container, in the inside of said outer container one or more functional apparatus being housed, together with the related power supply accessories, arranged on a pull-out structure, which can slide through said upper portion.

Additionally, according to said patent applications, said road cabinet may comprise a crowning curb disposed on the upper part of said outer container and above which a manhole cover is arranged.

In particular, according to European patent application No. 15185943.6, said rectractable road cabinet may comprise an automated handling system, comprising a threaded rod vertically disposed at the center of said outer container and coupled to the center of a base of said outer container, an internally threaded ring, arranged at the center of a base of said pull-out structure and coupled to said base with the possibility of rotation, and a tube, integral with said ring and inside which is defined a seat for housing of said threaded rod, said tube being coupled, with possibility of rotation, to said lid and being integral with a termination, disposed externally to said cover.

A limit of the solution described in the Italian patent application No. RM2014A000530 and in the corresponding European patent application No. 15185943.6 is to delegate to the structure of the road cabinet the load of the overlying manhole cover. In fact, in this way, the structure of the road cabinet requires constructive measures relating not only to the functionality for which the road cabinet is usually intended, but also related to the weight bearing requirements of a load applied from the outside. This is even more true considering that, in this way, the structure of the road cabinet must not only bear the weight of the overlying manhole cover, but also the additional weight of any loads that can be positioned above the manhole cover, generally indicated with the term "road live load".

It follows the need to realize the road cabinet having to take account of structural requirements in contrast with functional ones, in particular to the detriment of the lightness, necessary to facilitate the extraction of the road cabinet from the underground housing, and of the dissipation capacity of the developed by the transmission equipment contained in the cabinet itself.

In this context it is included the solution according to the present invention, which has the aim to provide an inground housing structure of a rectractable road cabinet, such as to relieve the road cabinet itself from having to bear any external load.

These and other results are obtained according to the present invention by proposing an inground housing structure which, although as resistant as to bear the weight of a manhole cover and of possible road live loads, at the same time does not interfere with the functionality of the road cabinet, in particular by allowing the dissipation of heat developed by the interior equipment.

Purpose of the present invention is therefore to provide an inground housing structure of a rectractable road cabinet that allows to overcome the limits of the retractable road cabinets according to Italian patent application No. RM2014A000530 and the corresponding European patent application No. 15185943.6 and to obtain the previously described technical results.

A further object of the invention is that said inground structure can be manufactured with substantially limited costs, both as regards the costs of production and as concerns the management costs.

Another object of the invention is to propose an inground housing structure of a road cabinet which is simple, safe and reliable.

Therefore a first specific object of the present invention is a housing structure of a rectractable road cabinet, said housing structure being apt to be buried and comprising a base, apt to constitute a support base for said road cabinet, and an articulated frame, comprising at least four posts, that define the vertical edges of said housing structure, said posts resting on said base and being connected together at the bottom by means of lower beams and at the top by means of upper beams, said upper beams constituting a quadrangle arranged horizontally, i.e. the perimeter of an ideal supporting plane of an overlying manhole cover.

Preferably, according to the present invention, in the upper part, between said posts are arranged side plates.

Additionally, according to the invention, preferably said base and said articulated frame comprise mutual coupling means, which more preferably comprise pins protruding vertically from said base and corresponding holes on said lower beams, and wherein even more preferably said pins are threaded and said mutual coupling means additionally comprise nuts, screwed on said threaded pins in order to tighten said lower beams to said base.

Again according to the invention, said base may be made of reinforced concrete and said pins are integral to the rebar of said base.

Preferably, always according to the invention, all the components of said articulated frame are made of steel and are coupled by bolting.

It is additionally a second specific object of the present invention a method of laying a rectractable road cabinet in an inground housing structure as defined above, comprising the following steps:

- providing a housing excavation of said rectractable road cabinet and of said inground housing structure;
- arranging said base within said excavation;
- arranging said road cabinet on said base;
- arranging said articulated frame on said base;
- ensuring said articulated frame on said base;
- arranging a manhole cover above said articulated frame.

It is evident the effectiveness of the inground housing structure of a road cabinet of the present invention, which allows arranging an economical solution from the installation point of view and technically valid as regards the structural and functional aspects.

The present invention will be now described, for illustrative but not limitative purposes, according to its preferred embodiment, with particular reference to the figures of the accompanying drawings, wherein:

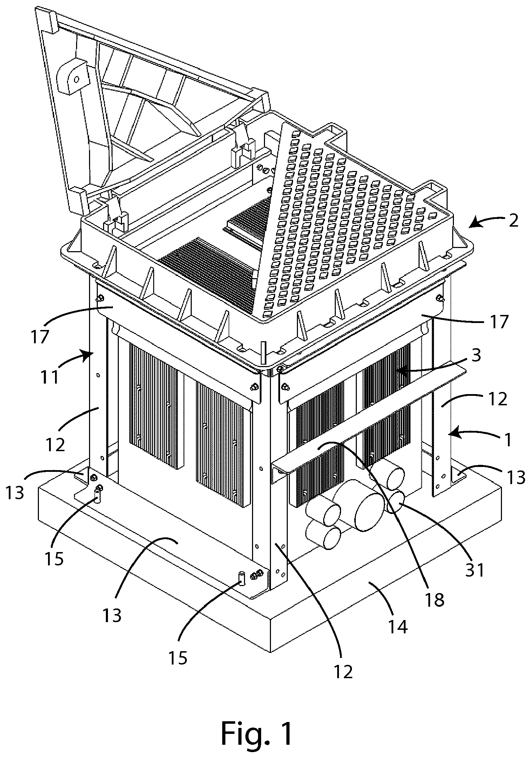

- Figure 1 shows a perspective view of an inground housing structure according to the present invention, inside which is housed a rectractable road cabinet, and above which is present a manhole cover shown in the open configuration;

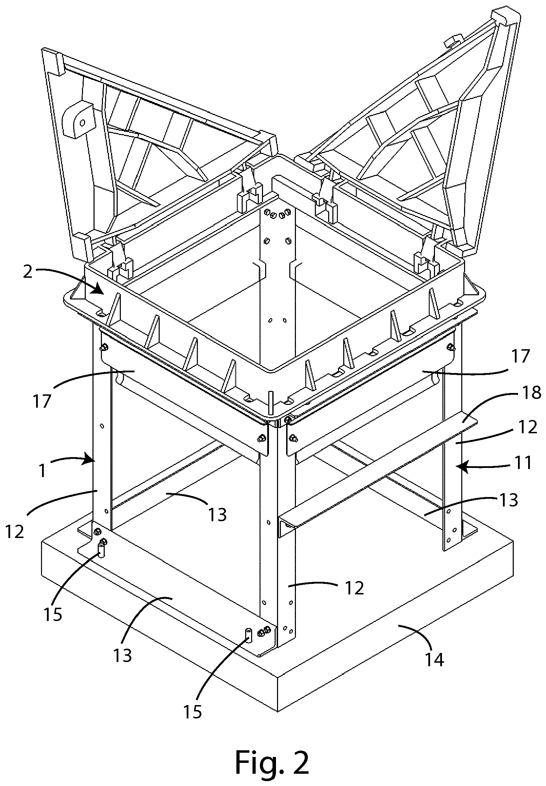

- Figure 2 shows a perspective view of the housing structure of Figure 1, devoid of the road cabinet,

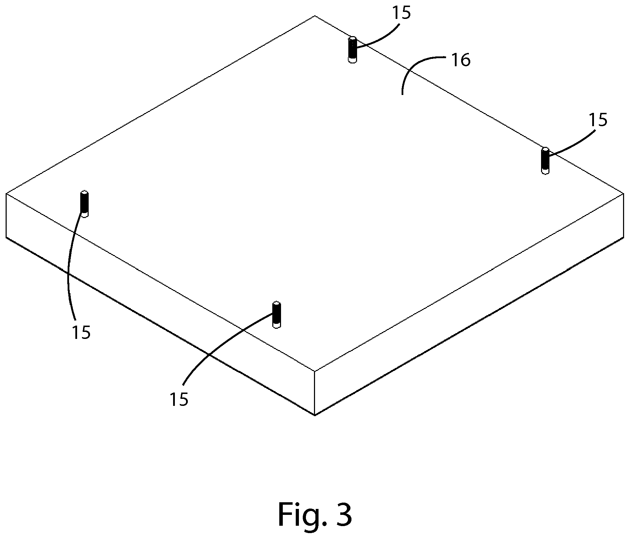

- Figure 3 shows a perspective view of the base of the housing structure of Figure 1,
- Figure 4 shows a perspective view of the wire mesh of the base of the rebar in Figure 3,
- Figure 5 shows a perspective view of a rectractable road cabinet resting on the base of the housing structure of Figure 3, and

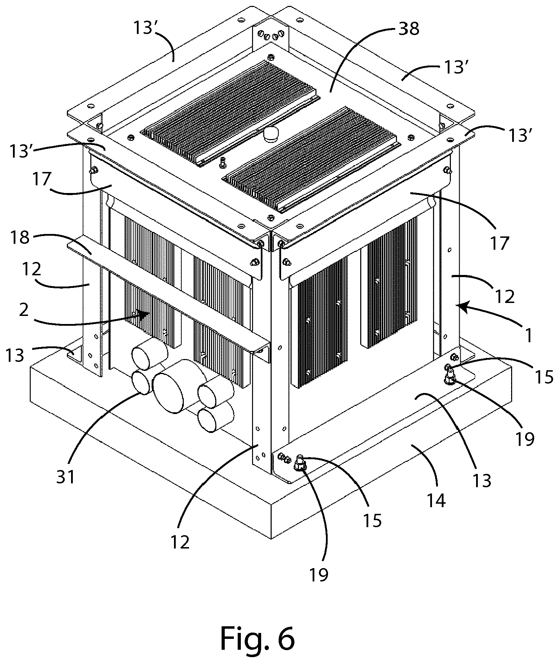

- Figure 6 shows a perspective view of the inground housing structure of Figure 1, without the manhole cover of Figure 1, inside which a rectractable road cabinet is housed, equipped with automated extraction mechanism.

Referring to the figures, the present invention concerns an inground housing structure, generally indicated by the reference number 1, which supports a manhole cover 2 in cast iron for roads, type D400 and which encloses inside a road cabinet 3, of the type already described in Italian patent application No. RM2014A000530 on behalf of the same applicant.

The abbreviation D400 indicates that the manhole cover 2 is designed to withstand a maximum road live load of 400 q.

The inground housing structure 1 shown in the figures consists of an articulated frame 11 made of steel, which supports the manhole cover 2, and a base 14 made of reinforced concrete, which forms the base of the entire structure 1.

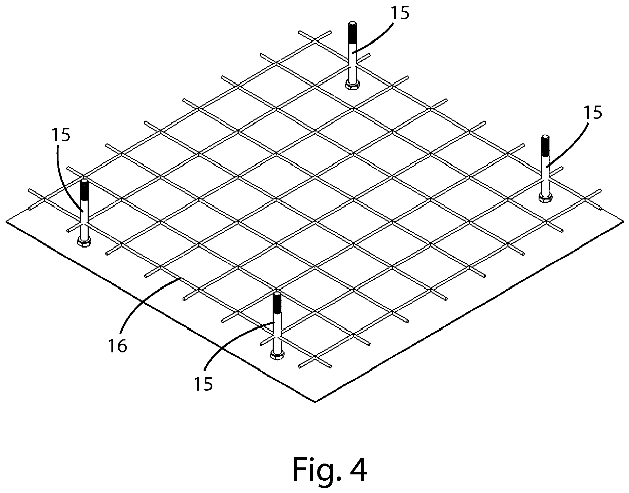

The base 14 is provided with four threaded pins 15 protruding vertically from the upper surface of the base 14 and which are part of a rebar 16 (Figure 4) of the base 14.

The articulated frame 11 is constituted by four vertical posts 12, made with L-shaped angular profiles made of steel, joined between each other at their base by means of lower cross members 13, made with L-shaped angular profiles made of steel. The lower cross members 13 are arranged on three sides of the articulated frame 11, leaving free a side intended for an undisturbed passage of cables entrying and/or coming out from the road cabinet 3, through input and/or output channels 31. The free side also allows the installation of the housing structure 1, in particular during assembly of the articulated frame 11 on the base 14, which will be described later. On the side free from the lower cross members 13, posts 12 are joined by an intermediate cross member 18, disposed at the mid-height of the posts 12. Holes are present on the lower cross members 13, said holes being intended to be passed by the threaded pins 15 of the base 14. The posts 12 are joined between them at the top by upper cross members 13', made with L-shaped angular profiles made of steel. Plates 17 are arranged below the upper cross members 13', said plates are made of steel and serve for the containment of the soil that could fall from the excavation walls and cover the road cabinet 3. The function of the plates 17, together with the upper cross-members 13', is, therefore, also that of creating an internal empty space within the inground housing structure 1, above the upper cover 38 of the road cabinet 3 and below the manhole cover 2. All the components of the articulated frame are coupled between each other by means of coupling means which do not make use of weldings, i.e. are preferably coupled between each other by means of bolts.

The installation on the road of the inground housing structure 1 is made by preparing an excavation, the depth of which, compared to the asphalt floor, has a height equal to that of the entire structure 1 and the overlying manhole cover 2.

On the bottom of the excavation it is mechanically put down the base 14, using eyebolts (not shown) inserted on the four threaded pins 15, which emerge from the surface of the base 14.

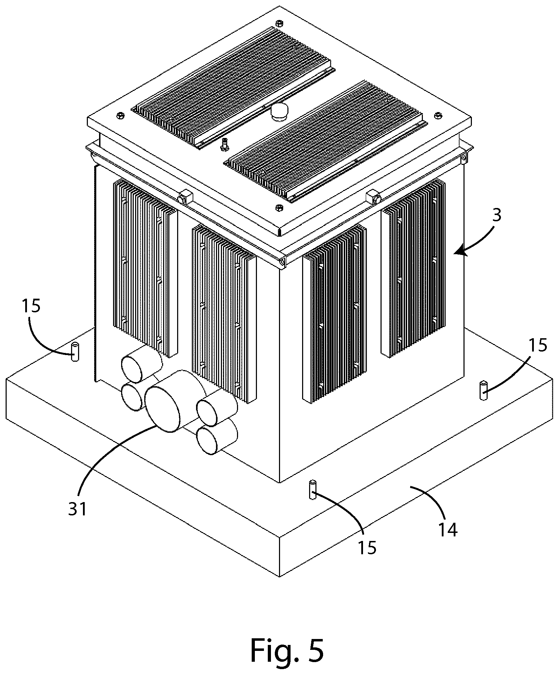

On the base 14 it is then posed the road cabinet 3, achieving the configuration shown in Figure 5 and subsequently it is posed the articulated frame 11, which is arranged so as to surround the road cabinet 3 and to exceed it in height, thus avoiding that any accidental load could burden on the same. The correct positioning of the articulated frame 11 on the base 14 is secured by the alignment required for the threaded pins 15 can fit into the corresponding holes of the lower beams 13 of the articulated frame 11.

Subsequently, the articulated frame 11 is secured to the four threaded pins 15 of the base 14, by screwing of a nut 19 on each of the four threaded pins 15.

The manhole cover 2 made of cast iron, through his own frame, is finally placed on the articulated frame 11, securing it with bolts made of steel.

The inground housing structure 1 according to the present invention does not hinder in any way the dissipation of the heat generated by the equipment contained in the road cabinet 3. Therefore, the road cabinet 3 can be free of moving fans or cooling elements.

The dimensioning of the housing structure for a road cabinet according the present invention must take into account mainly the load applied to it. For a structure that can be classified as a D400, i.e. that can bear a road live load up to 400 q, the following calculations apply by way of example but not limitation.

Example 1. Sizing the articulated frame made of steel

Taking into consideration an articulated frame 11 with a 60cmx60cm square section, made with posts 12 made of L-shaped profiles (equal sides) made of FE 510 galvanized steel, arranged vertically on the four sides of the square and connected between them at the ends by means of lower beams 13 and upper beams 13', for the support of a 60cmx60cm manhole cover 2 made of cast iron, type D 400, the following calculations apply.

The calculation is related to a post and in a symmetrical manner applies to the others, between which it is divided the total load of resistance of the manhole cover, that is 40000kg, therefore, on each post a maximum load equal to 40000: 4 = 10000kg must be considered.

In the theory of elasticity of a post, so used, it is defined critical Euler load the compressive force, the value of which generates deflection, creating instability to buckling load.

In the absence of deformation, the post, subject to a "normal centered" strain N and bound at the extremes, undergoes a stress σ equal to:

$$\sigma = N/A$$

If, however, the post is subjected to a heeling so that the axis line is deformed, the force N produces a moment Ny(x), to which an internal moment reacts that determines a condition of equilibrium, given by the equation:

$$EJ\ y''(x) + Ny(x) = 0$$

whose solution is, met some mathematical boundary conditions,

$$N_n \cdot L^2/E \cdot J = \pi^2 \cdot n^2$$

whence

$$N_n = \pi^2 \cdot n^2 \cdot E \cdot J/L^2$$

The expression indicates that there are n possible configurations of balance (indifferent equilibrium).
The smallest of the values of $N_n$ corresponds to the passage from the condition of stable equilibrium to that of unstable equilibrium. This value is obtained by putting n = 1 and is called Eulerian critical load.
The result is the expression:

$$N_{cr} = \pi^2 \cdot Jm \cdot E/I_i^2$$

in which

$N_{cr}$ = critical force,
Jm = 9,46 cm$^4$, minimum of the moment of inertia of the section of the post, which is that relative to the axis n-n (Fig. 5),
E = 21·10$^5$ kg/cm$^2$, Young's modulus,
A = 6,91 cm$^2$, the contour area of the section of the post,
$\sigma_r$ = 5100 kg/cm$^2$ = steel breaking load,
$I_i$ = minimum length (in cm) between two inflections, depending on the type of constraint at the ends of the post, which becomes I =l, the total length of the post, if the post is hinged at both ends; or $I_2$=0,7·l, if the post is fixed at the first end and hinged at the second; or even $I_3$=0,5·l, if the post is fixed at both ends.

For the structure under consideration the post hinged at both ends is considered, I =l=100cm, so in the end it is

$$N_{cr} = \pi^2 \cdot Jm \cdot E/l^2 =$$
$$= 3,14^2 \cdot 9,46 \cdot 21 \cdot 10^5 /10^4 = 19567,80kg$$

The result obtained, 19567,80kg, is greater than 10000kg, i.e. the load to be considered distributed on each post so that the structure can be considered to be able to bear an road live load equal to 40000 kg (ie 400q, road live load to be considered in D400 structures), for which the structure is well beyond what is necessary to guarantee such a result.
Additionally, by considering

$$\sigma_{cr} = N_{cr}/A =$$
$$= 19567,80/6,91 = 2831,80kg/cm^2$$

$$\sigma_{cr} < \sigma_r$$

$$2831{,}80 \text{kg/cm}^2 < 5100 \text{kg/cm}^2$$

Hence a degree of security, defined as the ratio between $\sigma_r$ and $\sigma_{cr}$, equal to $\sigma_r/\sigma_{cr} = 1{,}8$

Example 2. Sizing the base in reinforced concrete

The base 14 made of concrete has the form of a 10cm thick screed made of reinforced concrete, which is the base on which the load resistance of the manhole cover 2 insists.

If a base having a size of 80cmx80cm=6400cm$^2$ is taken into account, the necessary strength of the soil to withstand the applied load is

$$R = 40000/6400 = 6{,}25 \text{ kg/cm}^2$$

which is within the average of those normally encountered in the areas chosen for the installation.

Choosing a square configuration of the base 14, with the articulated frame 11 anchored to the center, for a better distribution of loads, rather than the 90x70cm rectangular conformation, similar to that in use in the wells of Telecom Italia telephone company, the rebar 16 of iron of the base 14 made of concrete works in traction, similarly on all four sides, and specifically in the peripheral zone, of about 20cm, free and not occupied by the area of the articulated frame 11.

Taking into consideration one side of the free base, as a slab of surface area A = 20x80cm and rectangular reagent section (base B=80cm, height H=10cm), wedged at the perimeter corresponding to the area of the articulated frame 11, assumed

P = total load
R = resistance of the soil
A = surface of the slab
J = moment of inertia of the slab section
B = 80cm = base of the slab section
H = 10cm height of the slab section
Mm = maximum moment of the slab section at the wedge
I = 20cm = slab width
$\sigma c$ = section stress under compression
X = distance from neutral axis
$\sigma f$ = section stress under tensile strength
m = elasticity module ratio
Ff = iron tensile strength
Af = iron reagent area
K = 3 = safety factor
At = section area of an iron rod with Ø of 5mm
N = number of rods
d = interdistance of the iron rods

it is obtained

$$P = R \cdot A = 6{,}25 \cdot 80 \cdot 20 = 10000 \text{kg}$$

$$J = B \cdot H^3/12 = 80000/12 = = 6667 \text{cm}^4$$

$$Mm = -P \cdot l/2 = -10000 \cdot 10 = 100000 \, kg \cdot cm,$$

$$\sigma c = Mm \cdot X/J = 100000 \cdot 5/6667 = 74 \, kg/cm^2,$$

$$\sigma f = m \cdot \sigma c/X = 10 \cdot 74/5 = 148 \, kg/cm^2,$$

$$Ff = \sigma f \cdot A/2 = 148 \cdot 400 = 59200 \, kg$$

$$Af = 59200/(1400/K) = 59200/467 = 127 \, cm^2,$$

$$At = 2{,}5 \cdot 2{,}5 \cdot 3{,}14 = 20 \, cm^2,$$

$$N = Af/At = 127/20 = 7$$

$$d = 80/7 = 11 \, cm$$

ie it is required an electrowelded net with Ø5mm and mesh size $\leq$ 11x11cm.

For ease of use it is possible to use a commercial electrowelded net with Ø5mm and 10x10cm square mesh.

The present invention has been described for illustrative but not limitative purposes, according to its preferred embodiments, but it is to be understood that variations and/or modifications can be made by those skilled in the art without departing from the relevant scope of protection , as defined by the enclosed claims.

**Claims**

1.   Housing structure (1) of a rectractable road cabinet (2), said housing structure (1) being apt to be buried and comprising a base (14), apt to constitute a support base for said road cabinet, and an articulated frame (11), comprising at least four posts (12), that define the vertical edges of said housing structure (1), said posts (12) resting on said base (14) and being connected together at the bottom by means of lower beams (13) and at the top by means of upper beams (13'), said upper beams constituting a quadrangle arranged horizontally, i.e. the perimeter of an ideal supporting plane of an overlying manhole cover (2).

2.   Housing structure (1) according to claim 1, **characterised in that**, in the upper part, between said posts (12) are arranged side plates (17).

3.   Housing structure (1) according to claim 1 or 2, **characterised in that** said base (14) and said articulated frame (11) comprise mutual coupling means.

4.   Housing structure (1) according to claim 3, **characterised in that** said mutual coupling means comprise pins (15) protruding vertically from said base (14) and corresponding holes on said lower beams (13).

5.   Housing structure (1) according to claim 4, **characterised in that** said pins (15) are threaded and said mutual coupling means additionally comprise nuts (19), screwed on said threaded pins (15) in order to tighten said lower beams (13) to said base (14).

6.   Housing structure (1) according to any one of the preceding claims, **characterised in that** said base (14) is made of reinforced concrete.

7.   Housing structure (1) according to claim 6, and to claim 4 or 5, **characterised in that** said pins (15) are integral to the rebar (16) of said base (14).

8. Housing structure (1) according to any one of the preceding claims, **characterised in that** all the components of said articulated frame (11) are made of steel.

9. Housing structure (1) according to any one of the preceding claims, **characterised in that** all the components of said articulated frame (11) are coupled by bolting.

10. Method of laying a retractable road cabinet (3) in an inground housing structure (1) as defined in any one of claims 1-9, **characterised by** the fact that it comprises the following stages:

- providing a housing excavation of said retractable road cabinet (3) and of said inground housing structure (1);
- arranging said base (14) within said excavation;
- arranging said road cabinet (3) on said base;
- arranging said articulated frame (11) on said base (14);
- ensuring said articulated frame (11) on said base (14);
- arranging a manhole cover (2) above said articulated frame (11).

Fig. 1

Fig. 2

Fig. 3

Fig. 4

Fig. 5

Fig. 6

Europäisches Patentamt
European Patent Office
Office européen des brevets

# EUROPEAN SEARCH REPORT

Application Number

EP 17 15 6628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ES 2 120 900 A1 (CENTRA ELECTRIC S A [ES]) 1 November 1998 (1998-11-01) * column 2, line 34 - column 3, line 8; figures * | 1,3,8 | INV. H02B1/50 |
| X | FR 2 812 979 A1 (URBAN NT [FR]) 15 February 2002 (2002-02-15) * page 2, lines 26-29 * * page 3, lines 12-23 * * page 4, lines 20-24; figures 1,2 * | 1-10 | |
| A | DE 37 43 393 A1 (FLADUNG GMBH MANFRED [DE]) 23 March 1989 (1989-03-23) * figures * | 1,10 | |

TECHNICAL FIELDS SEARCHED (IPC)

H02B

The present search report has been drawn up for all claims

| Place of search | Date of completion of the search | Examiner |
|---|---|---|
| The Hague | 3 July 2017 | Castanheira Nunes, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 208 901 A1**

## ANNEX TO THE EUROPEAN SEARCH REPORT
## ON EUROPEAN PATENT APPLICATION NO.

EP 17 15 6628

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2017

| Patent document cited in search report | | Publication date | Patent family member(s) | Publication date |
|---|---|---|---|---|
| ES 2120900 | A1 | 01-11-1998 | NONE | |
| FR 2812979 | A1 | 15-02-2002 | NONE | |
| DE 3743393 | A1 | 23-03-1989 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT RM20140530 A

- EP 15185943 A